# EUROPEAN PATENT SPECIFICATION

(11) **EP 2 636 922 B1**
(45) Date of publication and mention of the grant of the patent: **27.04.2016**
(21) Application number: 11837914.8
(22) Date of filing: 26.10.2011
(51) Int. Cl.: F16F 15/134, F16F 15/123

(54) **TORQUE VARIATION ABSORPTION DEVICE**
VORRICHTUNG ZUR ABSORPTION VON DREHMOMENTVERÄNDERUNGEN
DISPOSITIF D'ABSORPTION DE VARIATION DE COUPLE

(30) Priority: 02.11.2010 JP 2010246774; 02.11.2010 JP 2010246773
(43) Date of publication of application: 11.09.2013
(73) Proprietor: Aisin Seiki Kabushiki Kaisha, Aichi 448-8650 (JP)
(72) Inventor: MORI, Masato, Kariya-shi Aichi 448-8650 (JP); MIYAZAWA, Tetsuhiro, Kariya-shi Aichi 448-8650 (JP); EBATA, Masaru, Kariya-shi Aichi 448-8650 (JP); KAWAZOE, Hiroshi, Kariya-shi Aichi 448-8650 (JP)
(74) Representative: TBK
(86) International application number: PCT/JP2011/074711
(87) International publication number: WO 2012/060264

(56) References cited:
- EP-A1- 1 686 285
- EP-A2- 1 626 198
- DE-A1- 10 133 694
- FR-A1- 2 637 664
- JP-A- 62 228 751
- JP-A- 2010 031 889
- JP-U- H0 667 947
- US-A1- 2002 173 361
- US-A1- 2003 085 097

## Description

### TECHNICAL FIELD

The present invention relates to a torque fluctuation absorbing apparatus that absorbs fluctuating torque section rotating members.

### BACKGROUND ART

In an automobile having a manual transmission, a torque fluctuation absorbing apparatus is provided in the power transmission path between the engine and transmission, and absorbs (suppresses) fluctuating torque of the engine. A torque fluctuation absorbing apparatus has a damper part that absorbs fluctuating torque by elastic force. As the damper part, there is a damper part that has: a first rotating member; a second rotating member that is arranged so as to be able to rotate relative to the first rotating member; plural coil springs that buffer twisting that occurs between the first rotating member and second rotating member; spring seats (seat members) that are located between one of the end portions of the coil springs and the second rotating member; and spring seats (seat members) that are located between adjacent coil springs. In this kind of damper part, there are stopper portions for restricting twist in the damper part.

For example, in Patent Literatures (PTL) 1 and 2, when twisting occurs in the damper part, that twisting in the damper part is restricted by a first outside support portion, which extends in a direction of rotation from the outside portion in a radial direction of the first spring seat body, coming into contact with a second outside support portion, which extends in the direction of rotation from the outside portion in the radial direction of the second spring seat body.

[PTL 1] Japanese Patent Kokai JP 2010-31888 A
[PTL 2] Japanese Patent Kokai JP 2000-31889 A

### SUMMARY

The entire disclosures of Patent Literatures 1 and 2 above are incorporated herein by reference thereto. The following analysis is given by the present invention.
However, in the first spring seat and second spring seat that are disclosed in Patent Literatures 1 and 2 the first inside support portion of the first spring seat and the first inside support portion of the second spring seat do not come into contact even when twisting in the damper part occurs, so when large load input such as impact torque that occurs due to the operation of the driver is exerted, stresses that occur in the spring seats are concentrated in the outside support portions that function as stoppers, and it becomes difficult to maintain strength. Furthermore, a torque fluctuation absorbing apparatus according to the preamble of claim 1 is known from JP 2010 031 889 A. Further torque fluctuation absorbing apparatuses are disclosed in EP 1 686 285 A1, US 2002/173361 A1, EP 1 626 198 A2, US 2003/085097 A1, FR 2 637 664 A1 and DE 101 33 694 A1.

It is a main object of the present invention to provide a torque fluctuation absorbing apparatus that is capable of maintaining the strength of the stopper portions of the seat members.

According to the present invention, the above object is solved with a torque fluctuation absorbing apparatus having the features of claim 1. Further embodiments are laid down in the dependent claims.

With the present invention, when the stopper portions of seat members are in contact with each other, by supporting the load in at least portions that are both further on the radially outside and the inside than the coil spring, the stress occurring in the seat members is dispersed, and thus it is possible to improve the strength and durability of the seat members.

### BRIEF DESCRIPTION OF THE DRAWINGS

FIG. 1 is a partial cutaway top plan view as seen in the axial direction, and schematically illustrates a construction of a torque fluctuation absorbing apparatus of a first example of the present invention,
FIG. 2 is a cross-sectional view of section X-X' in FIG. 1, and schematically illustrates the construction of a torque fluctuation absorbing apparatus of a first example of the present invention,
FIG. 3 is a cross-sectional view of section Y-Y' in FIG. 1, and schematically illustrates the construction of a torque fluctuation absorbing apparatus of a first example of the present invention,
FIG. 4 is a cross-sectional view of section Z-Z' in FIG. 1, and schematically illustrates the construction of a torque fluctuation absorbing apparatus of a first example of the present invention,
FIG. 5 is a partial enlarged top plan view that schematically illustrates the positional relationship between a seat member and a plate in a torque fluctuation absorbing apparatus of a first example of the present invention,
FIG. 6 is a top plan view as seen in the axial direction, and schematically illustrates the construction of a plate in a torque fluctuation absorbing apparatus of a first example of the present invention,
FIGS. 7A to 7C schematically illustrate the construction of a seat member in a torque fluctuation absorbing apparatus of a first example of the present invention, where FIG. 7A is a top plan view as seen from the outside in the radial direction, FIG. 7B is a cross-sectional view of section x-x', and FIG. 7C is a top plan view as seen in the direction of arrow 'a',
FIGS. 8A to 8C schematically illustrate the construction of another seat member in a torque fluctuation absorbing apparatus of a first example of the present invention, where FIG. 8A is a top plan view as seen from the outside in the radial direction, FIG. 8B is a cross-sectional view of section y-y', and FIG. 8C is a top plan view as seen in the direction of arrow 'b',
FIGS. 9A to 9C schematically illustrate the construction of a seat member in a torque fluctuation absorbing apparatus of a second example of the present invention, where FIG. 9A is a top plan view as seen from the outside in the radial direction, FIG. 9B is a cross-sectional view of section x-x', and FIG. 9C is a top plan view as seen in the direction of arrow 'a',
FIGS. 10A to 10C schematically illustrate the construction of another seat member in a torque fluctuation absorbing apparatus of a second example of the present invention, where FIG. 10A is a top plan view as seen from the outside in the radial direction, FIG. 10B is a cross-sectional view of section y-y', and FIG. 10C is a top plan view as seen in the direction of arrow 'b',
FIGS. 11A to 11C schematically illustrate the construction of a seat member in a torque fluctuation absorbing apparatus of a third example of the present invention, where FIG. 11A is a top plan view as seen from the outside in the radial direction, FIG. 11B is a cross-sectional view of section x-x', and FIG. 11C is a top plan view as seen in the direction of arrow 'a',
FIGS. 12A to 12C schematically illustrate the construction of another seat member in a torque fluctuation absorbing apparatus of a third example of the present invention, where FIG. 12A is a top plan view as seen from the outside in the radial direction, FIG. 12B is a cross-sectional view of section y-y', and FIG. 12C is a top plan view as seen in the direction of arrow 'b' and
FIG. 13 is a top plan view as seen in the axial direction, and schematically illustrates the construction of a plate in a torque fluctuation absorbing apparatus of a fourth example of the present invention.

### [Preferred Modes]

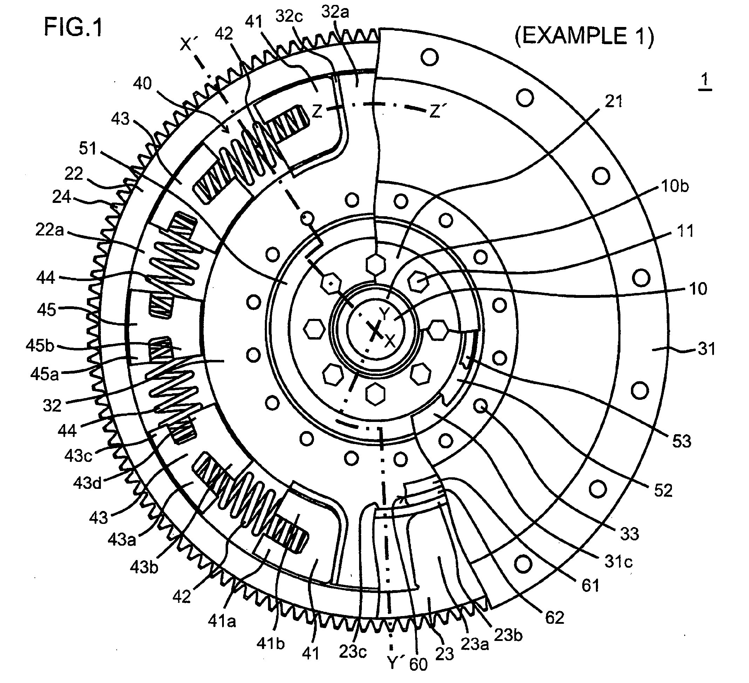

The torque fluctuation absorbing apparatus of a first embodimen of the present invention includes: a first rotating member (22, 23 in FIG. 1) that is arranged so as to be able to rotate; a second rotating member (32 in FIG. 1) that is arranged so as to be able to rotate relative to the first rotating member; elastic members (42 in FIG. 1) that absorb fluctuating torque due to twisting between the first rotating member and second rotating member; first seat members (41 in FIG. 1) that together with supporting one end of the elastic members, receive a force that is transmitted from one of the first rotating member and second rotating member when twisting occurs between the first rotating member and second rotating member; and second seat members (43 in FIG. 1) that together with supporting the other end of the elastic member, receive a force that is transmitted from the other of the first rotating member and second rotating member when twisting occurs between the first rotating member and second rotating member; where each first seat member has a first stopper portion (41a, 41b in FIG. 1) that extends toward the second seat member and that is composed of a first extending portion (41a in FIG. 1) that supports a portion of the elastic member that is separated a specified distance, from the axis of rotation of the first rotating member; and a second extending portion (41b in FIG. 1) that supports a portion of the elastic member that is separated a distance, from the axis of rotation of the first rotating member, that is less than the specified distance; each second seat member has a second stopper portion (43a, 43b in FIG. 1) that extends toward the first seat member and that is composed of a first extending portion (43a in FIG. 1) that supports a portion of the elastic member that is separated a specified distance from the axis of rotation of the first rotating member, and a second extending portion (43b in FIG. 1) that supports a portion of the elastic member that is separated a distance, from the axis of rotation of the first rotating member, that is less than the specified distance; and where twisting between the first rotating member and the second rotating member is restricted by abutting to each other of the first stopper portions and the second stopper portions.

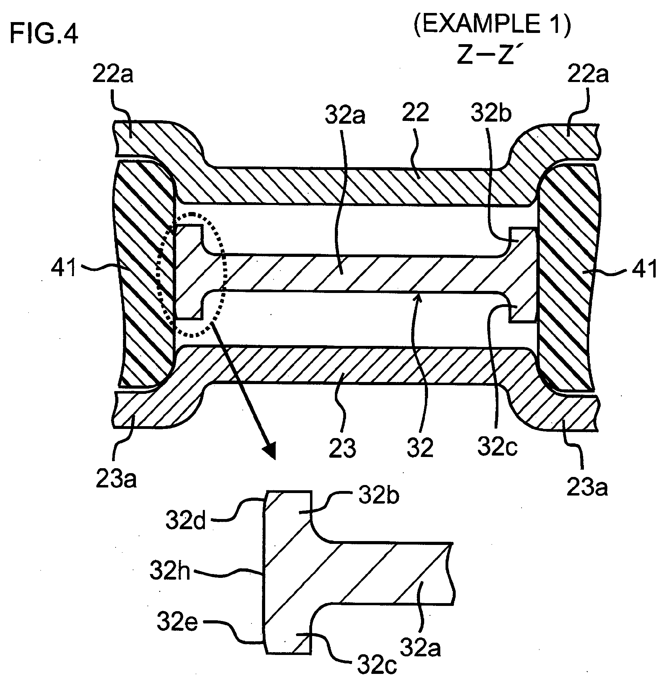

The torque fluctuation absorbing apparatus of a second embodiment of the present invention includes: a first rotating member (22, 23 in FIG. 4); a second rotating member (32 in FIG. 4) that, together with being arranged so as to be able to rotate relative to the first rotating member, is ring shaped and has a plurality of protruding parts 32a on the end surface on the outer periphery that protrude in a direction away from the axis of rotation of the first rotating member; at least one elastic member (42 in FIG. 1) that absorbs fluctuating torque due to twisting between the first rotating member and the second rotating member; and seat members (41 in FIG.4) that, together with being located in the circumferential direction between the end portions of the elastic members and the protruding parts, are able to come into contact with the protruding parts; where the protruding parts have contact portions (32b, 32c in FIG. 4) that extend in the axial direction of the second rotating member, and these contact portions come into contact with the seat members.

In the torque fluctuation absorbing apparatus of the second embodiment of the present invention, the contact portions preferably have a portion on the surface that can come into contact with the seat member that is formed along a line in the radial direction of the second rotating member that passes through the center of the axis of rotation of the second rotating member.

In the torque fluctuation absorbing apparatus of the present invention, preferably the contact portions are formed continuously further toward the outside in the radial direction of the second rotating member than the surface(s) that can come into contact with the seat members.

In the torque fluctuation absorbing apparatus of the second embodiment of the present invention, the contact portions are preferably formed so as to also be further continuous toward the inside in the radial direction of the second rotating section than the surface(s) that can come into contact with the seat members.

In the torque fluctuation absorbing apparatus of the second form of the present invention, the contact portions preferably are such that the corners that face the seat members have curved surface parts that are rounded to a smooth arc shape.

With this second form of the present invention, by forming contact portions that extend in the axial direction for the end sections in the circumferential direction of the protrusions of the second rotating member and that are able to come into contact with the seat members, together with improving the rigidity against loads in the direction of rotation of the second rotating member, the stress generated by the loads in the circumferential direction is dispersed and the fatigue strength is greatly improved.

In this disclosure, when the reference numbers in the drawings are used, those reference numbers are only for aiding in understanding, and are not intended to limit to the modes illustrated in the drawings.

### [Example 1]

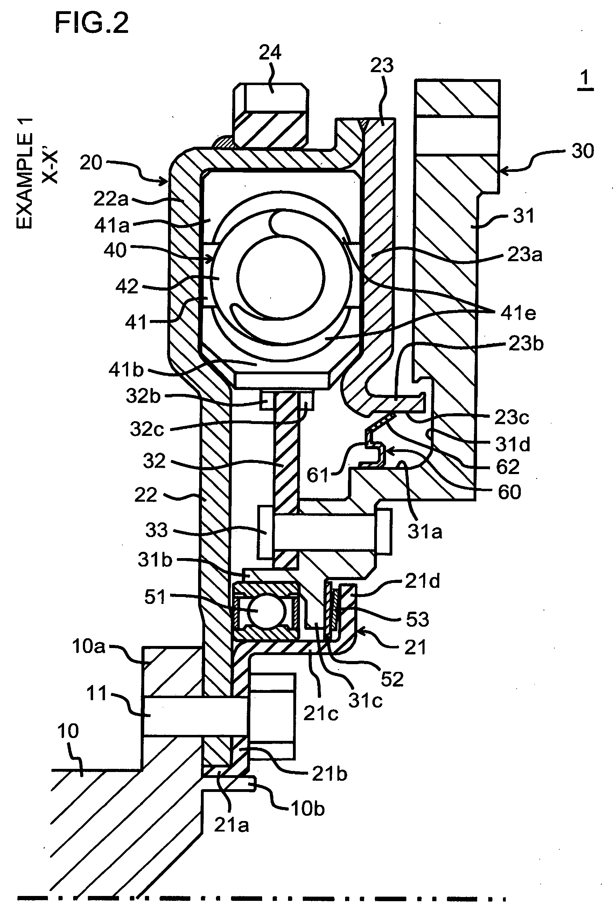

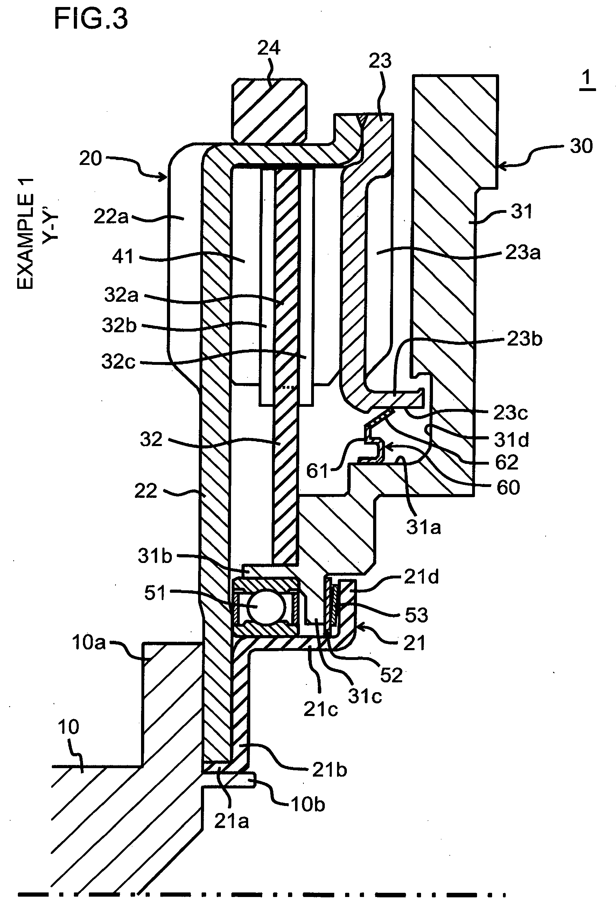

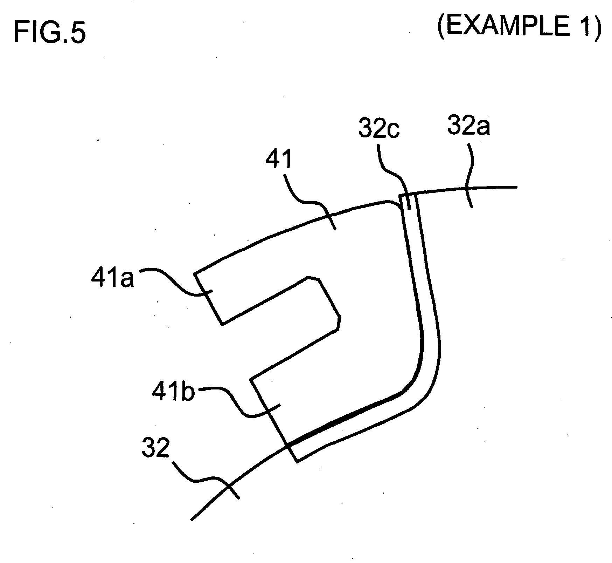

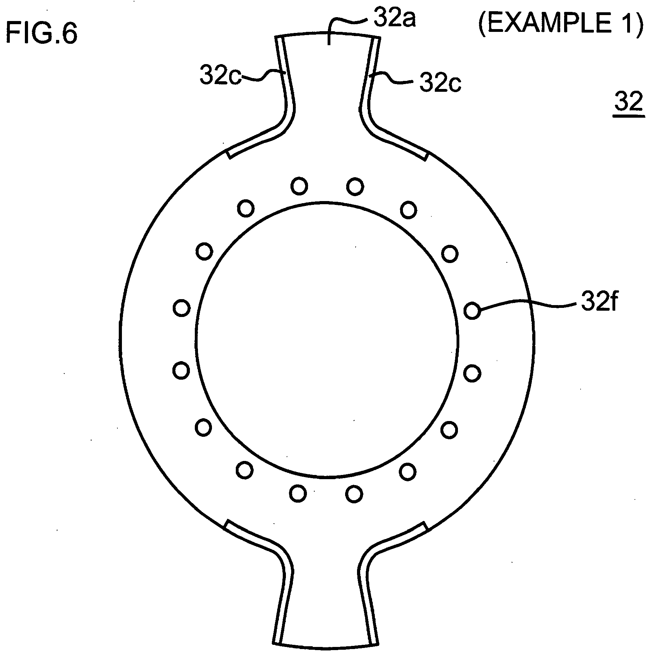

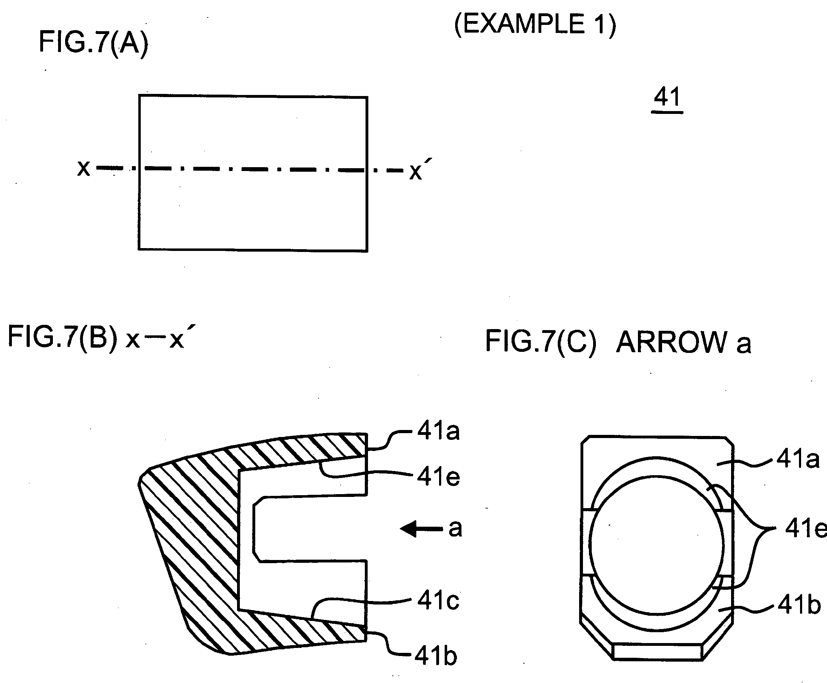

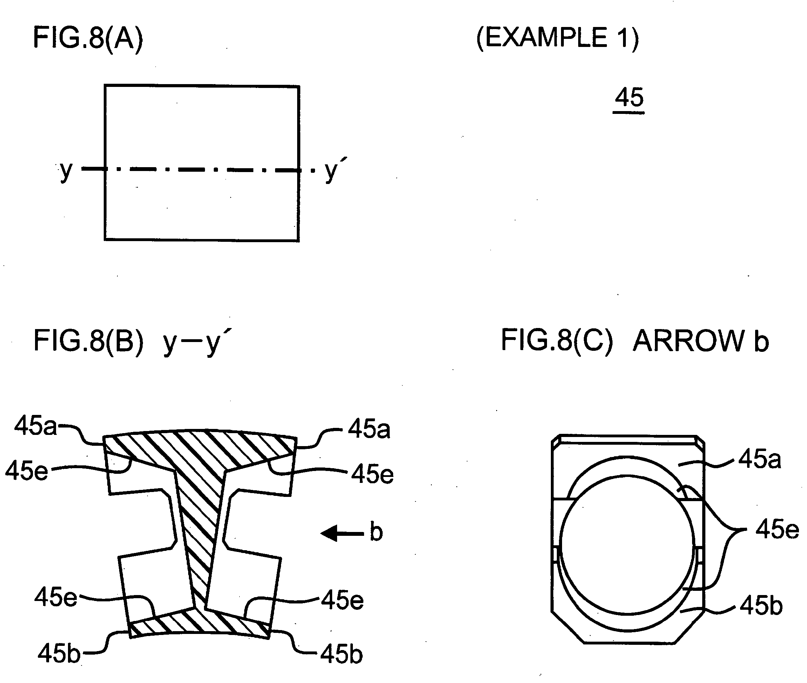

The torque fluctuation absorbing apparatus of a first example of the present invention will be explained using the drawings. FIG. 1 is a partial cutaway top plan view as seen in the axial direction, and schematically illustrates the construction of the torque fluctuation absorbing apparatus of a first example of the present invention. FIG. 2 is a cross-sectional view of section X-X' in FIG. 1, and schematically illustrates the construction of a torque fluctuation absorbing apparatus of the first example of the present invention. FIG. 3 is a cross-sectional view of section Y-Y' in FIG. 1, and schematically illustrates the construction of a torque fluctuation absorbing apparatus of a first example of the present invention. FIG. 4 is a cross-sectional drawing of section Z-Z' in FIG. 1, and schematically illustrates the construction of a torque fluctuation absorbing apparatus of a first example of the present invention. FIG. 5 is a partial enlarged top plan view that schematically illustrates the positional relationship between a seat member and plate in the torque fluctuation absorbing apparatus of the first example of the present invention. FIG. 6 is a top plan view as seen in the axial direction, and schematically illustrates the construction of a plate in a torque fluctuation absorbing apparatus of the first example of the present invention. FIGS. 7A to 7C schematically illustrate the construction of a seat member in a torque fluctuation absorbing apparatus of a first example of the present invention, where FIG. 7A is a top plan view as seen from the outside in the radial direction, FIG. 7B is a cross-sectional view of section x-x', and FIG. 7C is a top plan view as seen in the direction of arrow 'a'. FIGS. 8A to 8C schematically illustrate the construction of another seat member in the torque fluctuation absorbing apparatus of the first example of the present invention, where FIG. 8A is a top plan view as seen from the outside in the radial direction, FIG. 8B is a cross-sectional view of section y-y', and FIG. 8C is a top plan view as seen in the direction of arrow 'b'.

The torque fluctuation absorbing apparatus 1 of this first example is a device that absorbs (suppresses) fluctuating torque due to twisting between a first plate 20 (input side) and a second plate 30 (output side) (see FIG. 2). The torque fluctuation absorbing apparatus 1 has a damper part 40 that has a twist buffering function that absorbs fluctuating torque between the first plate 20 and second plate 30. The torque fluctuation absorbing apparatus 1 is provided in the power transmission path between the crankshaft 10 of the engine and the power transmission (not illustrated in the figures).

The first plate 20 is a ring-shaped assembly that is linked with the crankshaft 10 of the engine (See FIG. 1 to FIG. 3). The first plate 20 transmits the rotational force of the crankshaft 10 toward the damper part 40. The first plate 20, together with housing the damper part 40 and lubricant (for example, grease) inside thereof, seals the gap between the first plate 20 and second plate 30 with a seal member 60. The first plate 20, together with functioning as a bearing by way of a ball bearing 51 such that the second plate 30 is able to rotate, restricts the displacement in the axial direction of the second plate 30 by using the ball bearing 51, sliding material 52 and annular conical (Belleville) spring 53. The first plate 20 has as components, a support member 21, plate 22, plate 23 and a ring gear 24.

The support member 21 is a ring-shaped member that supports the second plate 30 so as to be able to rotate (see FIG. 1 to FIG. 3). The support member 21, being fastened to the plate 22 by bolt(s) 11, is fastened to a flange portion 10a of the crankshaft 10. As a result, the support member 21 integrally rotates with the plate 22. The support member 21 has a cylindrical portion 21a that fits around the outer circumference of a cylindrical portion 10b of the crankshaft 10. The cylindrical portion 21a is inserted inside of the plate 23, and restricts movement in the radial direction of the plate 23. The support member 21 has a ring-shaped flange portion 21b that extends to the outside in the radial direction from the end portion on the power transmission side (right side in FIG. 2) of the cylindrical portion 21a. The flange portion 21 b has hole parts for inserting the screw portion of the bolts 11. The flange portion 21 b has a cylindrical portion 21 c that extends in the axial direction to the power transmission side (right side in FIG. 1) from the outer peripheral end portion. The cylindrical portion 21c functions as a bearing by way of the ball bearing 51 so as to enable the second plate 30 (cylindrical portion 31b of plate 31) to rotate. The support member 21 has a ring-shaped flange portion 21 d that extends to the outside in the radial direction from the end portion on the power transmission side (right side in FIG. 1) of the cylindrical portion 21c. The flange portion 21 d, by way of the sliding material 52 and annular conical spring 53, restricts the movement in the axial direction of the second plate 30 (flange portion 31c of plate 31). The flange portion 21 d supports the end portion on the outer periphery of the annular conical spring 53.

The plate 22 is a ring-shaped member (see FIG. 1 to FIG. 4). The radially inner portion of the plate 22 is located around the outside of the cylindrical portion 21a of the support member 21. The radially inner portion of the plate 22 is held between the flange portion 21b of the support member and the flange portion 10a of the crankshaft 10, and is fastened to the support member 21 and the crankshaft 10 by the bolts 11. The plate 22 is separated from the outer ring of the ball bearing 51. The radially outer portion of the plate 22 has two envelope shaped housing (receiving) sections 22a for housing (receiving) seat members 41, 43, 45 and coil springs 42, 44 of the damper part 40. Each housing (receiving) section 22a is formed into a circular arc shape as seen in axial direction, and houses first seat member 41, coil spring 42, second seat member 43, coil spring 44, third seat member 45, coil spring 44, second seat member 43, coil spring 42 and first seat member 41. The end surfaces on both sides in the circumferential direction of the housing (receiving) section 22a can come into contact with or separate from the pair of first seat members that are located on both ends, such that when there is no twisting in the damper part 40, both of the pair of first seat members 41 come into contact with the end surfaces, and when there is twisting in the damper part 40, one of the pair of first seat members 41 comes into contact. The plate 22 is formed so as to cover the radially outer of the damper part 40. The radially outer surface of the plate 22 is inserted inside of a ring-shaped ring gear 24, and secured to the ring gear 34 by welding or the like. The plate 22 is such that the end portion on the power transmission side (right side in FIG. 2) comes in close contact with the plate 23 through the entire circumference, and is fastened to the plate 23 by welding or the like.

The plate 23 is a ring-shaped member (see FIG. 1 to FIG. 4). The plate 23 is such that the outer circumferential portion is in close contact with the plate 22 over the entire circumference, and fastened to the plate 22 by welding or the like. As a result, the plate 23 integrally rotates with the plate 22, and lubricant that is inside the first plate 20 does not leak out from the joined portion of the plates 22, 23. In the middle portion of the plate 23 there are two envelope shaped housings 23a for housing (receiving) the seat members 41, 43, 45 and coil springs 42, 44 of the damper part 40. Each housing (receiving) section 23a is formed into a circular arc shape as seen in the axial direction, and houses a first seat member 41, coil spring 42, second seat member 43, coil spring 44, third seat member 45, coil spring 44, second seat member 43, coil spring 42 and first seat member 41. Each housing (receiving) section 23a is such that the end surfaces on both sides in the circumferential direction can come into contact with or separate from the pair of seat members 41 on both ends, such that when there is no twisting in the damper part, both of the pair of first seat members 41 come into contact with the end surfaces, and when there is twisting in the damper part, one of the pair of first seat members 41 comes into contact. The plate 23 is such that in the inner circumferential portion there is a cylindrical section 23b that extends toward the power transmission side (right side in FIG. 1). The cylindrical section 23b is a component on the first plate 20 side for sealing the gap between the first plate 20 and second plate 30. The cylindrical section 23b extends to near a concave portion 31d of the plate 31, but does not come into contact with the plate 31. The cylindrical section 23b is such that on the inner circumferential surface, there is a seal surface 23c that comes into elastic contact with an elastic member 62 of the seal member 60. The seal surface 23c is finished so as to be a smooth cylindrical surface in the axial direction.

The ring gear 24 is a ring-shaped member that has a gear formed around the outer circumferential surface thereof (see FIG. 1 to FIG. 3). The ring gear 24 is located around the outer circumference of the plate 22, and engages with a pinion gear (not illustrated in the figure) of a starter motor (not illustrated in the figure).

The second plate 30 is an assembly that transmits rotational power from the damper part 40 to the power transmission (not illustrated in the figures) (see FIG. 1 to FIG. 3). The second plate 30, together with functioning as a bearing by way of the ball bearing 51 such that the first plate 20 can rotate, uses the ball bearing 51, sliding material 52 and annular conical spring 53 to restrict the movement in the axial direction relative to first plate 20. The second plate 30 is such that the gap between the second plate 30 and first plate 20 is sealed by a seal member 60. The second plate 30 has as components, a plate 31, a plate 32 and rivet(s) 33.

The plate 31 is a ring-shaped member (see FIG. 1 to FIG. 3). The outer circumferential portion of the plate 31 is connected to the power transmission (not illustrated in the figures) by bolts or the like. The plate 31 is such that further inside in the radial direction than the cylindrical section 23b of the plate 23, there is a seal surface 31a that is pressure contacted with the inner circumferential surface of a metal ring 61 of the seal member 60. The seal surface 31a is a smooth cylindrical surface in the axial direction, and the metal ring 61 is press fitted onto the seal surface 31 a. The plate 31 has an annular concave portion 31 d that is recessed on the power transmission side (right side in FIG. 2) further in the axial direction than the seal surface 31a, and recessed on the power transmission side (right side in FIG. 2) in the portion on the outside in the radial direction. The concave portion 31d is such that the tip end part of the cylindrical section 23b of the plate 23 is inserted without coming into contact. The inside of the plate 31 further in the radial direction than the seal surface 31a is connected to the plate 32 by rivets 33. As a result, the plate 31 integrally rotates with the plate 32. The plate 31 has a cylindrical portion 31 b in a portion further internal in the radial direction than the rivets 33, and that extends toward the engine side in the axial direction (left side in FIG. 2). The cylindrical portion 31b is supported by the cylindrical portion 21c of the support member 21 by way of the ball bearing 51 so as to be able to rotate. The plate 31 has a ring-shaped flange portion 31c that extends toward radially inside from a portion further internal in the radial direction than the rivets 33. The flange portion 31c is located between the ball bearing 51 and the sliding material 52, and is formed so as not to come into contact with the inner ring (lace) of the ball bearing 51. The flange portion 31c is pressed toward the ball bearing 51 side by the annular conical spring 53 via the sliding material 52.

The plate 32 is a ring-shaped member (see FIG. 1 to FIG. 6). The plate 32 is located around the outer circumference of the cylindrical portion 31 b of the plate 31. The inner circumferential portion of the plate 32 is connected to the plate 31 by rivets 33. As a result, the plate 32 integrally rotates with the plate 31. The plate 32 is located in the center between the plate 22 and the plate 23. The plate 32 has two protruding parts 32a in the outer peripheral (circumferential) portion that protrude toward the outside in the radial direction. The two protruding parts 32a are formed at positions that are shifted 180° from each other. The plate 32 houses the seat members 41, 43, 45 and coil springs 42, 44 in the circumferential direction between the two protruding parts 32a. The first seat member 41, coil spring 42, second seat member 43, coil spring 44, third seat member 45, coil spring 44, second seat member 43, coil spring 42 and first seat member 41 are housed in the circumferential direction between the (neighboring) protruding parts 32a. The protruding parts 32a are such that the end surfaces on both sides in the circumferential direction can come into contact with or separate from the pair of seat members 41 on both ends, such that when there is no twisting in the damper part 40, both of the pair of first seat members 41 come into contact with end surfaces, and when there is twisting in the damper part, one of the pair of seat members 41 comes into contact. The protruding parts preferably come into contact with or separate from the first seat members at the center in the axial direction of the first seat members 41.

On the end surfaces on both sides in the circumferential direction, the protruding part 32a has protrusions 32b, 32c that extend to both sides in the axial direction (see FIG. 4). The protrusions 32b, 32c are able to come into contact with or separate from the first seat member 41. The protrusions 32b, 32c, on the surfaces that are able to come into contact with or separate from the first seat member 41, have a portion that is formed along a line in the radial direction that passes through the center of the axis of rotation of the crankshaft 10, and can press the first seat member in the circumferential direction. The protrusions 32b, 32c are formed so as to be further continuous toward the inside in the radial direction than the surface that can come into contact with or separate from the first seat member (see FIG. 5). The protrusions 32b, 32c are formed such that the corners on the first seat member 41 side do not protrude, and have curved surface parts 32d, 32e, the corners on the first seat member 41 side thereof being rounded into a smooth circular arc shape (see FIG. 4). The method for forming the plate 32 is not specified. The portions where the protruding parts 32a come into contact with the first seat members 41 (contact surfaces 32h) are linear (planar) portions between the curved surface parts 32d, 32e.

The rivets 33 are members for connecting the plate 31 and plate 32 (see FIG. 1 to FIG. 3).

The damper part 40 receives rotational power that is inputted from a rotating shaft on the engine side, and outputs that rotational power to the power transmission (see FIG. 2). The damper part 40 is such that plural coil springs 42, 44 (see FIG. 2) are located on one circumference (see FIG. 1). The damper part 40 has as components, seat members 41, 43, 45 and coil springs 42, 44.

Each first seat member 41 is housed between the housing (receiving) sections 22a, 23a of the plates 22, 23 and the protruding parts 32a of the plate 32, and is located between end surfaces in the circumferential direction of the housing (receiving) sections 22a, 23a and protruding part 32a and the end section of a coil spring 42 (see FIG. 1, FIG. 2, FIG. 4, FIG. 5 and FIG. 7). Metal, resin or rubber, or a combination thereof can be used for the first seat members 41, and in order to reduce wear of the coil spring, resin can be used. Each first seat member has extending portions 41 a, 41 b that extend in the circumferential direction from portions on the outside and inside in the radial direction. The extending portions 41a, 41 b come into contact with the opposing second seat member 43 when twisting occurs in the damper part 40, and become a first stopper portion, which is a portion that restricts the twisting in the damper part 40. Each extending portion 41a can come into contact with a first extending portion 43a. Each extending portion 41 b can come into contact with a second extending portion 43b. In order to absorb the shock when the extending portions 41 a, 41 b come into contact with the extending portions 43a, 43b and restrict twisting that occurs in the damper part 40, a cushioning material (not illustrated in the figures) such as rubber or the like can be placed inside of the coil springs that are located between the first seat members 41 and second seat members 43, and before the extending portions 41a, 41 b, 43a, 43b come into contact, the cushioning material can elastically come into contact with first seat members 41 and the second seat members 43. The tip end surfaces of the extending portions 41 a, 41 b are formed along a line in the radial direction that passes through the center of the axis of rotation of the crankshaft 10. The surfaces of the extending portions 41a, 41 b that face the outer circumferential surfaces of the coil springs 42 are inclined surfaces 41e that are formed so as to separate from the outer circumferential surfaces of the coil springs 42 going in a direction from the base of the extending portions 41 a, 41b (base end portions) toward the tip end portions, in order that there is no contact with the coil springs 42 even when twisting in the damper part 40 occurs. The surfaces of the first seat members 41 that can come into contact with the protruding parts 32a (including protrusions 32b, 32c) of the plate 32 are formed along a line in the radial direction that passes through the center of the axis of rotation of the crankshaft 10.

The coil springs 42 are housed between the housing (receiving) sections 22a, 23a of the plates 22, 23 and the protruding parts 32a of the plate 32, and are located between first seat members 41 and second seat members 43 (see FIG. 1). Each coil spring 42 contracts when twisting (twisting between the plates 22, 23 and the plate 32) occurs in the damper part 40, and absorbs shock due the rotational difference between the plates 22, 23 and the plate 32. It is also possible to place another coil spring inside of the coil spring 42.

The second seat members 43 are housed between the housing (receiving) sections 22a, 23a of the plates 22, 23 and the protruding parts 32a of the plate 32, and are located between the coil springs 42 and the coil springs 44 (see FIG. 1). Metal, resin or rubber or a combination of these can be used for the second seat members 43, and in order to reduce wear of the coil springs 42, 44, resin can be used. Each second seat member 43, on both sides in the circumferential direction, has extending portions 43a, 43b, 43c, 43d that extend in the circumferential direction from portions on the outside and inside in the radial direction. The extending portions 43a, 43b come into contact with the extending portions 41 a, 41 b of the opposing first seat member 41 when twisting occurs in the damper part 40, becoming a second stopper portion that restricts twisting that occurs in the damper 40. The extending portion 43a can come into contact with the extending portion 41a. The second extending portion 43b can come into contact with the second extending portion 41b. In order to absorb shock when the extending portions 43a, 43b, 41a, 41b come into contact with each other to restrict twisting in the damper part 40, it is possible to place a cushioning material (not illustrated in the figures) such as rubber inside of the coil spring 42 located between the second seat member 43 and first seat member 41 so that before the extending portions 43a, 43b, 41a, 41 b come into contact with each other, the cushioning material elastically comes into contact with the second seat member 43 and first seat member 41. When twisting occurs in the damper part 40, the extending portions 43c, 43d come into contact with extending portions 45a, 45b of the opposing third seat member 45, becoming a third stopper portion that restricts twisting in the damper part 40. The third extending portion 43c can come into contact with the first extending portion 45a. The fourth extending portion 43d can come into contact with the second extending portion 45b. In order to absorb shock when the extending portions 43c, 43d, 45a, 45b come into contact and restricted twisting in the damper part 40, it is possible to place a cushioning material (not illustrated in the figures) such as rubber or the like inside of the coil springs 44 that are located between the second seat member 43 and third seat member 45, such that before the extending portions 43c, 43d, 45a, 45b come into contact with each other, the cushioning material elastically comes into contact with the second seat members 43 and third seat member 45. The tip end surfaces of the extending portions 43a, 43b are formed along a line in the radial direction that passes through the center of the axis of rotation of the crankshaft 10. The tip end surfaces of the extending portions 43c, 43d are formed along a line in the radial direction that passes through the center of the axis of rotation of the crankshaft 10. The surfaces of the extending portions 43a, 43b that face the outer circumferential surfaces of the coil springs 42 are inclined surfaces that are formed so as to separate from the outer circumferential surfaces of the coil springs 42 going in a direction from the base of the extending portions 43a, 43b (base end portions) toward the tip end portions, in order that there is no contact with the coil springs 42 even when twisting in the damper part 40 occurs. The surfaces of the extending portions 43c, 43d that face the outer circumferential surfaces of the coil springs 44 are inclined surfaces that are formed so as to separate from the outer circumferential surfaces of the coil springs 44 going in a direction from the base of the extending portions 43c, 43d (base end portions) toward the tip end portions, in order that there is no contact with the coil springs 44 even when twisting in the damper part 40 occurs.

The coil springs 44 are housed between the housing (receiving) sections 22a, 23a of the plates 22, 23 and the protruding parts 32a of the plate 32, and are located between the second seat member 43 and the third seat member 45 (see FIG. 1). The coil springs 44 contract when twisting occurs in the damper part 40 (twisting between the plates 22, 23 and the plate 32), and absorb shock due to rotational difference between the plates 22, 23 and the plate 23. It is also possible to place another coil spring inside of the coil springs 44.

The third seat member 45 is housed between the housing (receiving) sections 22a, 23a of the plates 22, 23 and the plates 32, and is located between adjacent coil springs 44 (see FIG. 1 and FIG. 8). Metal, resin or rubber or a combination of these can be used for the third seat member 45, and in order to reduce wear of the coil springs 44, resin can be used. The third seat member 45 has extending portions 45a, 45b that extend in the circumferential direction from each portion on the outside and inside in the radial direction. The extending portions 45a, 45b come into contact with the extending portions 43c, 43d of the opposing second seat members 43 when twisting occurs in the damper part 40, becoming a fourth stopper portion that restricts twisting in the damper part 40. The first extending portions 45a can come into contact with a third extending portion 43c. The second extending portions 45b can come into contact with a fourth extending portion 43d. In order to absorb shock when the extending portions 45a, 45b, 43c, 43d come into contact with each other and restrict twisting in the damper part 40, a cushioning material (not illustrated in the figures) such as rubber can be placed inside of the coil spring 44 located between the third seat member 45 and the second seat members 43, and before the extending portions 45a, 45b, 43c, 43d come into contact with each other, the cushioning material can elastically come into contact with the third seat member 45 and the second seat member 43. The tip end surfaces of the extending portions 45a, 45b are formed on a line in the radial direction that passes through the center of the axis of rotation of the first plate 20. The surfaces of the extending portions 45a, 45b that face the outer circumferential surfaces of the coil springs 44 are inclined surfaces 45e that are formed so as to separate from the outer circumferential surfaces of the coil springs 44 going in a direction from the base of the extending portions 45a, 45b (base end portions) toward the tip end sections, in order that there is no contact with the coil springs 44 even when twisting in the damper part 40 occurs.

The ball bearing 51 is a ring-shaped bearing member for the support member 21 to support the plate 31 so as to be able to rotate (see FIG. 1 to FIG. 3). The ball bearing 51 has plural balls that are located between an outer ring and an inner ring. The outer ring is press fitted onto the inner circumferential surface of the cylindrical portion 31 b of the plate 31. The inner ring is press fitted around the outer circumferential surface of the cylindrical portion 21c of the support member 21.

The sliding material 52 is a ring-shaped member for restricting movement in the axial direction of the plate 31 (see FIG. 1 to FIG. 3). The sliding material 52 is located between the flange portion 31 c of the plate 31 and the flange portion 21d of the support member 21. The sliding material 52 is pressed from the flange portion 21d side of the support member by the annular conical spring 53, and is pressure-contacted with the flange portion 31c of the plate 31 so as to be able to slide.

The annular conical spring 53 is located between the flange portion 21d of the support member 21 and the sliding material 52, and is a conical disk shaped spring (Belleville) that presses the flange portion 31c of the plate 31 by way of the sliding material 52 toward the ball bearing 51 side (see FIG. 1 to FIG. 3).

The seal member 60 is a ring-shaped member that seals the gap between the first plate 20 and second plate 30 (see FIG. 1 to FIG. 3). The seal member 60 has a metal ring 61 and an elastic body 62. The metal ring 61 is a ring-shaped member that is formed into a specified shape with a press. The metal ring 61 is fastened to a specified location on the seal surface 31a of the plate 31. The elastic body 62, together with being fastened to the end section on the outside in the radial direction of the metal ring 61, is a ring-shaped portion that extends toward the outside in the radial direction. The elastic body 62, for example, is made of rubber or resin that is capable of elastic deformation. The end portion on the outer circumference of the elastic body 62 comes into elastic contact with the seal surface 23c of the plate 23.

With this first example, in the damper part 40, by forming protrusions 32b, 32c that extend to both sides in the axial direction from the end portions in the circumferential direction of the protruding parts 32a of the plate 32 that can come into contact with the first seat members 41, it is possible to improve the rigidity of the plate 32 against loads in the direction of rotation, and by dispersing the stress that occurs due to loads in the circumferential direction, it is possible to greatly improve the fatigue strength. Moreover, by forming curved surface parts 32d, 32e in the corner portions on the first seat member 41 sides of the protrusions 32b, 32c, it is possible to reduce the concentration of stress that occurs due to uneven contact (abutting) between the first seat members 41 and the plate 32.

Moreover, with this first example, by providing extending portions 41a, 41b, 43a, 43b, 43c, 43d, 45a, 45b that extend in the circumferential direction at each portion on the outside and inside in the radial direction of the seat members 41, 43, 45, and supporting the loads that occur when corresponding stopper portions come into contact with each other by both the outside and inside stopper portions in the radial direction, it is possible to make the stress that occurs at the areas of contact in the circumferential direction between the plates 22, 23 and plate 32 with the first seat members 41 more uniform, and thus it is possible to improve the strength and durability of the seat members 41, 43,45.

### [Example 2]

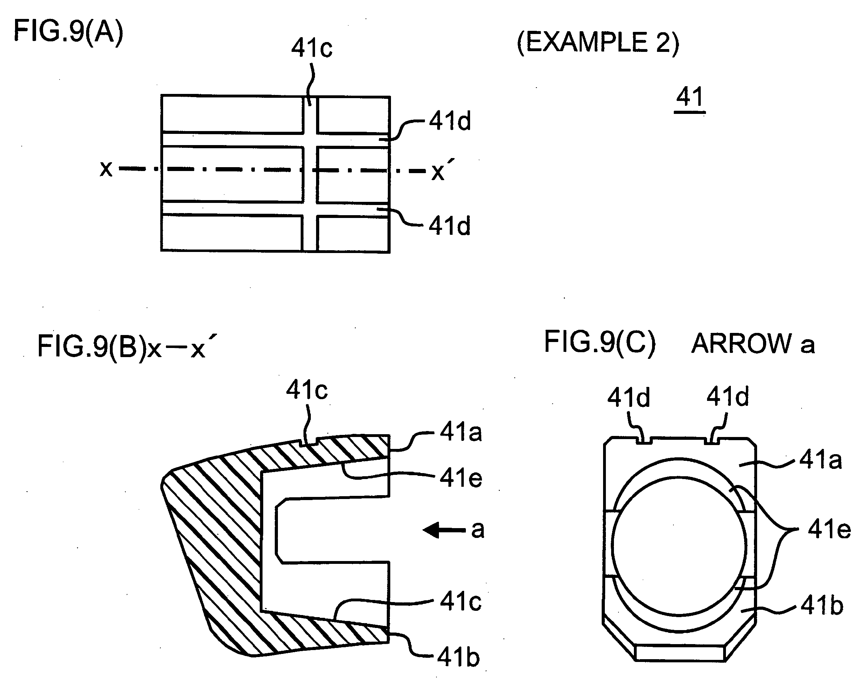

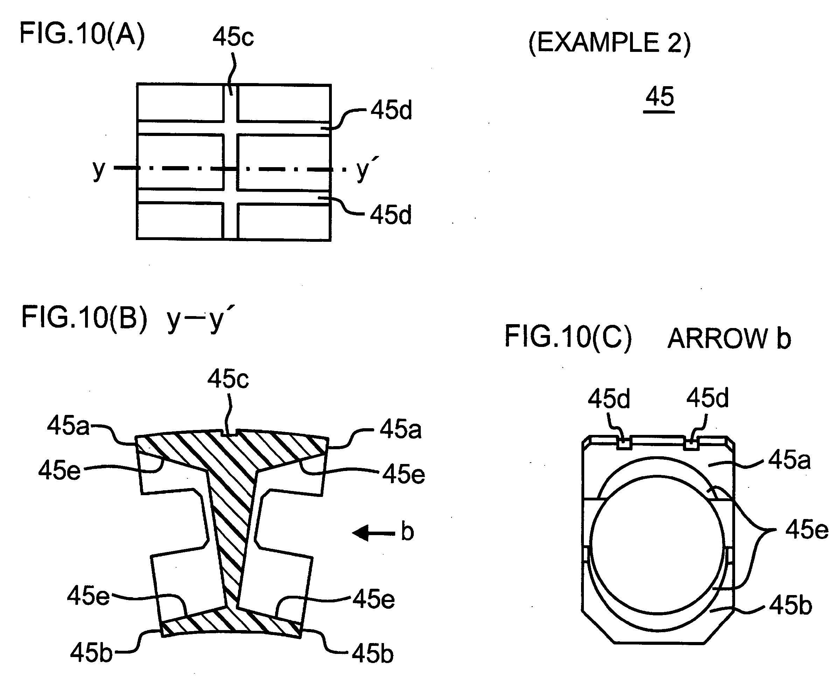

A torque fluctuation absorbing apparatus of a second example of the present invention will be explained using the drawings. FIGS. 9A to 9C schematically illustrate the construction of a seat member in a torque fluctuation absorbing apparatus of a second example of the present invention, where FIG. 9A is a top plan view as seen from the outside in the radial direction, FIG. 9B is a cross-sectional view of section x-x', and FIG. 9C is a top plan view as seen in the direction of arrow 'a'. FIGS. 10A to 10C schematically illustrate the construction of another seat member in a torque fluctuation absorbing apparatus of a second example of the present invention, where FIG. 10A is a top plan view as seen from the outside in the radial direction, FIG. 10B is a cross-sectional view of section y-y', and FIG. 10C is a top plan view as seen in the direction of arrow 'b'.

This second example is a variation of the first example, wherein groove parts 41c, 41d, 45c, 45d are formed in the outside surface in the radial direction of the seat members 41, 45. Moreover, groove parts (not illustrated in the figures) are also formed in the outside surfaces of the second seat members (43 in FIG. 1) of the first example. Other than the groove parts, the construction is the same as that of the first example.

The first seat members 41 have groove parts 41c, 41d in the outside surface in the radial direction (friction surface with the plate 22 in FIG. 2). The groove parts 41c, 41d serve the role of collecting lubricant and abrasion debris. There is one groove part 41c (plural groove parts are also possible) that is formed along the axial direction. There are two groove parts 41d (any number more than one is possible) that are formed along the circumferential direction. The formation direction of the groove parts 41 d is 90° relative to the formation direction of the groove part 41c. There should be at least one of either the groove parts 41c or 41d. The other construction of the first seat members 41 is the same as the construction of the first seat members 41 of the first example (41 in FIG. 7). Similar groove parts are formed in the third seat member 45 and the second seat members (43 in FIG. 1) of the first example.

With this second example, together with achieving the same effect as in the first example, by forming groove parts 41c, 41d, 45c, 45d in the surfaces (friction surfaces) on the outside in the radial direction of the seat members 41, 45, it is possible to reduce friction by providing a steady supply of lubricant to the friction surfaces, as well as it is possible to prevent abrasion debris generated from penetrating to the friction surfaces, it is possible to prevent a decrease in strength of the extending portions 41a, 41b, 45a, 45b due to a reduction in surface area on the tip end surfaces in the circumferential direction of the extending portions 41a, 411b, 45a, 45b caused by wear, it is possible to improve stability of the friction force between the seat members 41, 45 and the plate 22, and it is possible to prevent a drop in performance due to degradation over time of the torque absorption device due to a decrease in durability of the seat members 41, 45 and drop in performance of the lubricant.

### [Example 3]

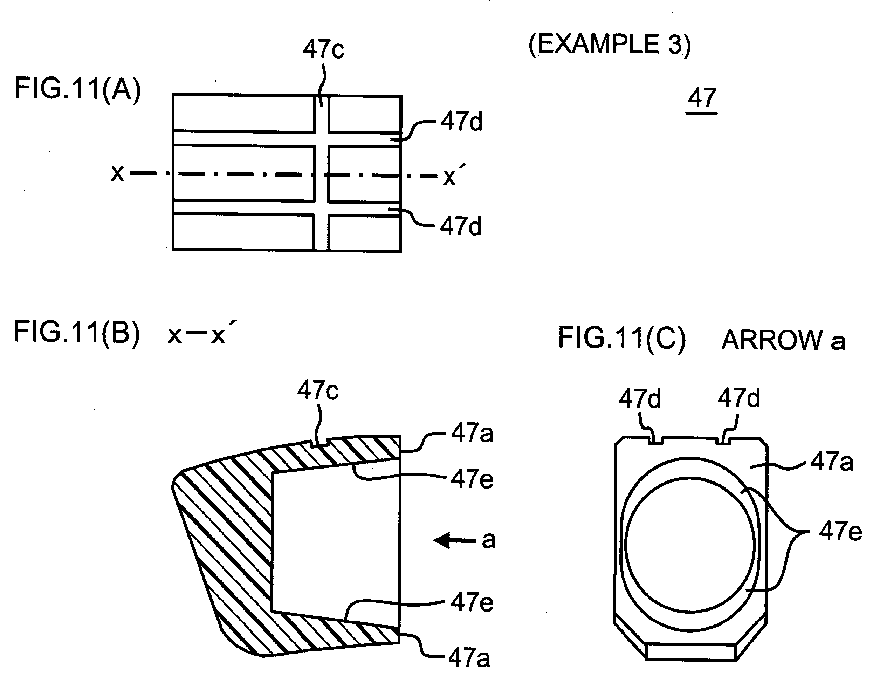

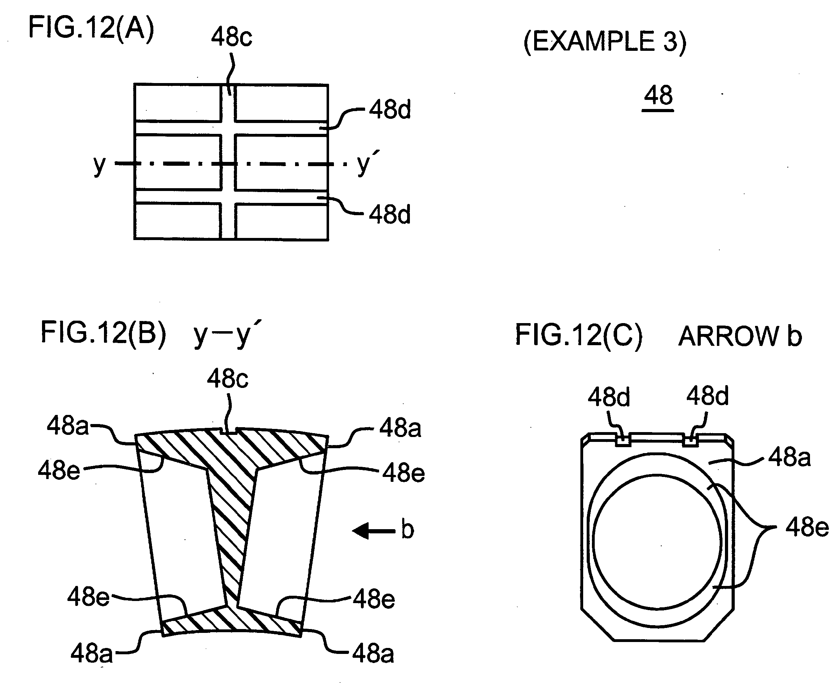

A torque fluctuation absorbing apparatus of a third example of the present invention will be explained using the drawings. FIGS. 11A to 11C schematically illustrate the construction of a seat member in a torque fluctuation absorbing apparatus of a third example of the present invention, where FIG. 11A is a top plan view as seen from the outside in the radial direction, FIG. 11B is a cross-sectional view of section x-x', and FIG. 11C is a top plan view as seen in the direction of arrow 'a'. FIGS. 12A to 12C schematically illustrate the construction of another seat member in a torque fluctuation absorbing apparatus of a third example of the present invention, where FIG. 12A is a top plan view as seen from the outside in the radial direction, FIG. 12B is a cross-sectional view of section y-y', and FIG. 12C is a top plan view as seen in the direction of arrow 'b'.

The third example is a variation of the first example, wherein the stopper portions of seat members 47, 48 are not divided into two sections that extend in the circumferential direction from each portion on the outside and inside in the radial direction, but extend in the circumferential direction without being divided so as to completely surround the coil springs (not illustrated in the figure). Moreover, in the third example, as in the second example, groove parts 47c, 47d, 48c, 48d are formed on the surfaces on the outside in the radial direction of the seat members 47, 48. The first seat members 47 correspond to the first seat members (41 in FIG. 7) of the first example. The third seat member 48 corresponds to the third seat member (45 in FIG. 8) of the first example. It is also possible to form groove parts (not illustrated in the figures) on the surfaces on the outside in the radial direction of the second seat members (43 in FIG. 1) of the first example, and for the stopper portions (43a, 43b in FIG. 1) to extend in the circumferential direction without being divided, so as to completely surround the coil springs (not illustrated in the figures). The other construction is the same as that of the first example.

With this third example, together with achieving the same effects as in the first and second examples, by providing stopper portions 47a, 48a that extend in the circumferential direction without being divided so as to completely surround the coil springs in the seat members 47, 48, and supporting the load when the stopper portions are in contact with each other by the stopper portions 47a, 48a, it is possible to make the stress generated in the areas of contact in the circumferential direction between the plates (22 and 23 in FIG. 1) and the plate (32 in FIG. 1) with the first seal members 47 uniform, and it is possible to improve the strength and durability of the seat members 47, 48.

### [Example 4]

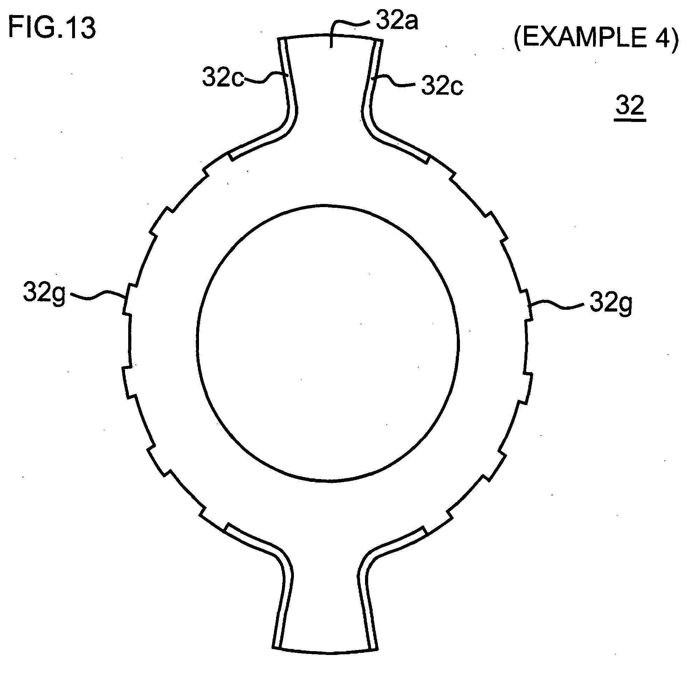

A torque fluctuation absorbing apparatus of a fourth example of the present invention will be explained using the drawings. FIG. 13 is a top plan view as seen in the axial direction, and schematically illustrates the construction of a plate in a torque fluctuation absorbing apparatus of a fourth example of the present invention.

This fourth example is a variation of the first example, where the hole parts (32f in FIG. 6) is not formed in the plate 32, and instead outer tooth shaped spline part 32g (portion having unevenness on the outer circumferential surface) is formed on the outer circumferential surface of the portion formed into a ring shape (surface except for the protruding part 32a). The spline part 32g is for fitting with specified parts of another mechanism on the outer circumference (for example a limiter section in which slipping occurs when it is not possible to absorb twisting in the damper part (40 in FIG. 1)). The other construction is the same as that of the first example. Moreover, the fourth example can be used in combination with the second and third examples. With the fourth example, the same effects as in the first example are achieved.

The "Background Art" and "Problems to Be Solved by the Invention" of Japanese Patent Application No. 2010-246774 (corresponds to claims 11 to 15) are as described below.

### (Background Art of Japanese Patent No. 2010-246774)

A torque fluctuation absorbing apparatus is provided in the power transmission path between an engine and transmission in an automobile having a manual transmission, and absorbs (suppresses) fluctuating engine torque. In a torque fluctuation absorbing apparatus, there is a damper part that absorbs fluctuating torque by way of elastic force. As a damper part, there is a damper part that has a first rotating member, a second rotating member that is arranged so as to be able to rotate relative to the first rotating member, a coil spring that buffers twisting that occurs between the first rotating member and second rotating member, and a spring seat (seat member) that is located between one end portion of the coil spring and the second rotating member.

For example, in Patent Literatures 1 and 2, a damper mechanism is disclosed in which the spring seat comes into contact in the direction of rotation with the output plate (second rotating member) and the area of contact between the spring seat and output plate is 250 mm² or greater. The spring seat comes into contact in the direction of rotation with a transmission section that extends in the radial direction form the main body of the output plate. The transmission section has a first protruding part that protrudes to the outside in the radial direction from the main body, and a second protruding part that extends to the engine side in the axial direction from the end portion in the direction of rotation of the first transmission section. The second protruding part is able to come into contact in the direction of rotation with the spring seat. The surface area of contact between the second protruding part and the spring seat is maintained at 250 mm² or greater. In other words, by increasing the surface area of contact between the spring seat and the second protruding part of the output plate, it is possible to improve the strength of the spring seat.

### (Problems to Be Solved By the Present Invention of Japanese Patent Application No. 2010-246774)

In the invention disclosed in Patent Literatures 1 and 2, construction is such that the contact surface area between the output plate and the spring seat is kept as large as possible, however, in actual use, when transmitting a load from the spring seat to the second protruding part of the output plate, the connecting area between the second protruding part and the first protruding part is taken to be a fulcrum, and the tip end portion of the second protruding part topples in the direction of the load. Therefore, the surface pressure on the surface where the second protruding part of the output plate comes into contact with the spring seat becomes uneven, and stress due to the spring seat is concentrated in the portion of contact with the connecting section between the second protruding part and the first protruding part, and the stress that occurs when the spring seats come into contact with each other in order to restrict twisting in the damper part as applied to the spring seats, which results in the strength and durability of the spring seats being greatly reduced.

Moreover, in the invention disclosed in Patent Literatures 1 and 2, by adding the stress that occurs when spring seats come into contact with each other in order to restrict twisting in the damper part to the second protruding part of the output plate, the tip end portion of the second protruding part repeatedly topples in the direction of the load with the connecting area between the second protruding part and first protruding part of the output plate as a fulcrum, so there is a possibility that fatigue damage will occur in the connecting portion between the second protruding part and the first protruding part of the output plate.

Furthermore, in the invention disclosed in Patent Literatures 1 and 2, the corner of the tip end of the second protruding part of the output plate becomes a sharp edge, and due to variation in the accuracy of the shape of the spring seats and output plate, there is a possibility that contact between the second protruding part of the output plate and the spring seat could become uneven, and that the generated stress will be locally concentrated, resulting in damage, possibly.

The main object related to claims 11 to 15 is to provide a torque fluctuation absorbing apparatus that is capable of improving the fatigue strength of the connecting portion between the protruding parts of the output plate and the seat members.

The embodiments and examples of the invention can be modified or adjusted within the framework of the entire disclosure of the present invention (including the claims and drawings), and based on the basic technical scope of the invention. Moreover, various combinations or selections of elements of disclosed elements (including the elements of the claims, elements of the embodiments, and elements in the drawings) are possible within the framework of the claims of the present invention. In other words, the present invention naturally includes any changes or modifications that can be obtained by one skilled in the art that are according to the entire disclosure, including the claims, and the technical scope.

### [Reference Signs List]

- 1: torque fluctuation absorbing apparatus
- 10: crankshaft
- 10a: flange portion
- 10b: cylindrical portion
- 11: bolt(s)
- 20: first plate (first rotating member)
- 21: support member
- 21a: cylindrical portion
- 21b: flange portion
- 21c: cylindrical portion
- 21d: flange portion
- 22: plate (first rotating member)
- 22a: housing (receiving) section
- 23: plate (first rotating member)
- 23a: housing (receiving) section
- 23b: cylindrical section
- 23c: seal surface
- 24: ring gear
- 30: second plate (second rotating member)
- 31: plate
- 31a: seal surface
- 31b: cylindrical portion
- 31c: flange portion
- 31d: concave portion
- 32: plate (second rotating member)
- 32a: protruding part
- 32b, 32c: protrusions [contact portions]
- 32d, 32e: curved surface part
- 32f: hole part
- 32g: spline part
- 32h: contact surface
- 33: rivet(s)
- 40: damper part
- 41: first seat member
- 41a: first extending portion (first stopper portion)
- 41b: second extending portion (first stopper portion)
- 41c, 41d: groove part
- 41e: inclined surface
- 42: coil spring
- 43: second seat member
- 43a: first extending portion (second stopper portion)
- 43b: second extending portion (second stopper portion)
- 43c: third extending portion (third stopper portion)
- 43d: fourth extending portion (third stopper portion)
- 44: coil spring
- 45: third seat member
- 45a: first extending portion (fourth stopper portion)
- 45b: second extending portion (fifth stopper portion)
- 45c, 45d: groove part
- 45e: inclined surface
- 47: first seat member
- 47a: stopper portion
- 47c, 47d: groove part
- 47e: inclined surface
- 48: third seat member
- 48a: stopper portion
- 48c, 48d: groove part
- 48e: inclined surface
- 51: ball bearing
- 52: sliding material
- 53: annular conical spring (Belleville)
- 60: seal member
- 61: metal ring
- 62: elastic body

## Claims

1. A torque fluctuation absorbing apparatus (1), comprising:
a first rotating member (20) that is arranged so as to be able to rotate;
a second rotating member (30) that is arranged so as to be able to rotate relative to the first rotating member (20);
an elastic member (42, 44) that absorbs fluctuating torque due to twisting between the first rotating member (20) and the second rotating member (30);
a first seat member (41) that, together with supporting one end of the elastic member (42), receives a force that is transmitted from one of the first rotating member (20) and second rotating member (30) when twisting occurs between the first rotating member (20) and second rotating member (30); and
a second seat member (43) that, together with supporting the other end of the elastic member (44), receives a force that is transmitted from one of the first rotating member (20) and second rotating member (30) when twisting occurs between the first rotating member (20) and second rotating member (30); wherein
the first seat member (41) has a first stopper portion that extends toward the second seat member (43) and comprises a first extending portion (41a) that supports a portion of the elastic member (42) that is separated a specified distance from an axis of rotation of the first rotating member (20), and a second extending portion (41b) that supports a portion of the elastic member (42) that is separated a distance from the axis of rotation of the first rotating member (20) that is less than the specified distance;
the second seat member (43) has a second stopper portion that extends toward the first seat member (41) and comprises a first extending portion (43a) that supports a portion of the elastic member (42) that is separated a specified distance from the axis of rotation of the first rotating member (20), and a second extending portion (43b) that supports a portion of the elastic member (42) that is separated a distance from the axis of rotation of the first rotating member (20) that is less than the specified distance; and
twisting between the first rotating member (20) and the second rotating member (30) is restricted by the first stopper portion coming into contact with the second stopper portion, wherein
the second rotating member (30) is formed into a ring shape, and has plural protruding parts (32a) on the outer peripheral end surface that protrude in a direction going away from the axis of rotation of the first rotating member (20);
there is at least one elastic member (42);
the first seat member (41) or the second seat member (43), being located in the circumferential direction between the end portion of the elastic member (42) and the protruding parts (32a), is able to come into contact with the protruding parts (32a); **characterized in that**
the protruding parts (32a) have contact portions (32b, 32c) extending in an axial direction of the second rotating member (30); and
the contact portions (32b, 32c) come into contact with the first seat member (41) or second seat member (43);
the contact portions (32b, 32c) are formed also to continue further to the outside in the radial direction of the second rotating member (30) than the surfaces (32h) that can come into contact with the first rotating member (20) or second rotating member (30); and wherein
the contact portions (32b, 32c) extend to both sides in the axial direction.

2. The torque fluctuation absorbing apparatus (1) according to claim 1, wherein
surfaces of the first stopper portion and second stopper portion that face a surface surrounding the elastic member (42, 44) are inclined surfaces that are formed so as to be inclined from a base end portion of the first stopper portion and second stopper portion toward tip ends in a direction going away from an outer circumferential surface of the elastic member (42, 44).

3. The torque fluctuation absorbing apparatus (1) according to claim 1 or 2, wherein
the first stopper portion extends toward the second stopper portion so as to cover an entire circumference of the elastic member (42, 44);
the second stopper portion extends toward the first stopper portion so as to cover the entire circumference of the elastic member (42, 44); and
twisting between the first rotating member (20) and second rotating member (30) is restricted by abutting to each other of the first stopper portion over the entire circumference of the elastic member (42, 44).

4. The torque fluctuation absorbing apparatus (1) according to any one of claims 1 to 3, wherein
the first seat member (41) and the second seat member (43) are metal, resin or rubber, or a combination thereof.

5. The torque fluctuation absorbing apparatus (1) according to any one of claims 1 to 4, wherein
the elastic member (42, 44) is a coil spring; and
another coil spring that is located inside of the coil spring and is located between the first seat member (41) and the second seat member (43).

6. The torque fluctuation absorbing apparatus (1) according to any one of claims 1 to 5, wherein
the elastic member (42, 44) is a coil spring; and
a cushioning material that, being located inside of the coil spring, is held between the first seat member (41) and second seat member (43) before the first stopper portion and second stopper portion abut to each other when twisting occurs between the first rotating member (20) and section rotating member (30).

7. The torque fluctuation absorbing apparatus (1) according to any one of claims 1 to 6, wherein
surfaces of the first stopper portion and second stopper portion that abut to each other are formed along a line in a radial direction that passes through a center of the axis of rotation of the second rotating member (30).

8. The torque fluctuation absorbing apparatus (1) according to any one of claims 1 to 7, wherein
each of the surfaces of the first seat member and second seat member that are separated remotemost from the axis of rotation of the first rotating member (20) is slidable with the first rotating member (20) and has groove part(s) (41c, 41d) formed therein.

9. The torque fluctuation absorbing apparatus (1) according to claim 8, wherein
the first rotating member (20) is ring shaped; and
one or more groove parts are formed in a circumferential direction of the first rotating member (20).

10. The torque fluctuation absorbing apparatus (1) according to claim 8 or claim 9, wherein
the first rotating member (20) is ring shaped; and
one or more groove parts are formed orthogonal to the circumferential direction of the first rotating member (20).

11. The torque fluctuation absorbing apparatus (1) according to any one of claims 1 to 10, wherein
the contact portions (32b, 32c) have surfaces (32h) that can come into contact with the first seat member (41) or second seat member (43), and
said surfaces (32h) comprise sections formed along a line in the radial direction of the second rotating member (30) that passes through the center of the axis of rotation of the second rotating member (30).

12. The torque fluctuation absorbing apparatus (1) according to any one of claims 1 to 11, wherein
the contact portions (32b, 32c) are formed also to continue further to radially inside of the second rotating member (30) than the surfaces that can come into contact with the first rotating member (20) or second rotating member (30).

13. The torque fluctuation absorbing apparatus (1) according to any one of the claims 11 to 12, wherein
corner sections of the contact portions (32b, 32c) that face the first seat member (41) or second seat member (43) have curved surface parts that are rounded to a smooth arc shape.

## Patentansprüche

1. Drehmomentschwankungsabsorptionsgerät (1) mit:
einem ersten Rotationselement (20), das so angeordnet ist, dass es in der Lage ist, zu rotieren;
einem zweiten Rotationselement (30), das so angeordnet ist, dass es in der Lage ist, relativ zu dem ersten Rotationselement (20) zu rotieren;
einem elastischen Element (42, 44), das ein schwankendes Drehmoment infolge der Verdrehung zwischen dem ersten Rotationselement (20) und dem zweiten Rotationselement (30) absorbiert;
einem ersten Sitzelement (41), das zusammen mit dem Stützen eines Endes des elastischen Elements (42) eine Kraft empfängt, die von einem von dem ersten Rotationselement (20) und dem zweiten Rotationselement (30) übertragen wird, wenn zwischen dem ersten Rotationselement (20) und dem zweiten Rotationselement (30) eine Verdrehung auftritt; und
einem zweiten Sitzelement (43), das zusammen mit dem Stützen des anderen Endes des elastischen Elements (44) eine Kraft empfängt, die von einem von dem ersten Rotationselement (20) und dem zweiten Rotationselement (30) übertragen wird, wenn zwischen dem ersten Rotationselement (20) und dem zweiten Rotationselement (30) eine Verdrehung auftritt; wobei
das erste Sitzelement (41) einen ersten Anschlagabschnitt hat, der sich in Richtung des zweiten Sitzelements (43) erstreckt und einen ersten Verlängerungsabschnitt (41a), der einen Abschnitt des elastischen Elements (42) stützt, der mit einem bestimmten Abstand von einer Rotationsachse des ersten Rotationselements (20) beabstandet ist, und einen zweiten Verlängerungsabschnitt (41b) aufweist, der einen Abschnitt des elastischen Elements (42) stützt, der von der Rotationsachse des ersten Rotationselements (20) mit einem Abstand beabstandet ist, der kleiner als der bestimmte Abstand ist, hat;
wobei das zweite Sitzelement (43) einen zweiten Anschlagabschnitt hat, der sich in Richtung des ersten Sitzelements (41) erstreckt und einen ersten Verlängerungsabschnitt (43a), der einen Abschnitt des elastischen Elements (42) stützt, der bei einem bestimmten Abstand von der Rotationsachse des ersten Rotationselements (20) beabstandet ist, und einen zweiten Verlängerungsabschnitt (43b) aufweist, der einen Abschnitt des elastischen Elements (42) stützt, der von der Rotationsachse des ersten Rotationselements (20) mit einem Abstand beabstandet ist, der kleiner als der bestimmte Abstand ist; und
das Verdrehen zwischen dem ersten Rotationselement (20) und dem zweiten Rotationselement (30) dadurch beschränkt wird, dass der erste Anschlagabschnitt mit dem zweiten Anschlagabschnitt in Kontakt kommt, wobei
das zweite Rotationselement (30) in eine Ringform geformt ist und eine Vielzahl von vorragenden Teilen (32a) an der Außenumfangsendfläche hat, die in einer Richtung vorragen, die von der Rotationsachse des ersten Rotationselements (20) weggeht;
es zumindest ein elastisches Element (42) gibt;
das erste Sitzelement (41) oder das zweite Sitzelement (43), das sich in der Umfangsrichtung zwischen dem Endabschnitt des elastischen Elements (42) und den vorragenden Teilen (32a) befindet, in der Lage ist, mit den vorragenden Teilen (32a) in Kontakt zu kommen; **dadurch gekennzeichnet, dass**
die vorragenden Teile (32a) Kontaktabschnitte (32b, 32c) haben, die sich in einer Achsrichtung des zweiten Rotationselements (30) erstrecken, und
die Kontaktabschnitte (32b, 32c) mit dem ersten Sitzelement (41) oder dem zweiten Sitzelement (43) in Kontakt kommen;
die Kontaktabschnitte (32b, 32c) so ausgebildet sind, dass sie zudem weiter zu der Außenseite in der Radialrichtung des zweiten Rotationselements (30) als die Oberflächen (32h) fortführen, die mit dem ersten Rotationselement (20) oder dem zweiten Rotationselement (30) in Kontakt kommen können; und wobei
sich die Kontaktabschnitte (32b, 32c) zu beiden Seiten in der Achsrichtung erstrecken.

2. Drehmomentschwankungsabsorptionsgerät (1) gemäß Anspruch 1, wobei
Oberflächen des ersten Anschlagabschnitts und des zweiten Anschlagabschnitts, die einer das elastische Element (42, 44) umgebenden Oberfläche zugewandt sind, geneigte Oberflächen sind, die so ausgebildet sind, dass sie von einem Basisendabschnitt des ersten Anschlagabschnitts und des zweiten Anschlagabschnitts in Richtung vorderer Enden in einer Richtung geneigt sind, dass sie von einer Außenumfangsfläche des elastischen Elements (42, 44) weggehen.

3. Drehmomentschwankungsabsorptionsgerät (1) gemäß Anspruch 1 oder 2, wobei
sich der erste Anschlagabschnitt in Richtung des zweiten Anschlagabschnitts erstreckt, sodass er einen gesamten Umfang des elastischen Elements (42, 44) bedeckt;
sich der zweite Anschlagabschnitt in Richtung des ersten Anschlagabschnitts erstreckt, sodass er den gesamten Umfang des elastischen Elements (42, 44) bedeckt; und
das Verdrehen zwischen dem ersten Rotationselement (20) und dem zweiten Rotationselement (30) dadurch beschränkt wird, dass sie von dem ersten Anschlagabschnitt über den gesamten Umfang des elastischen Elements (42, 44) aneinander anliegen.

4. Drehmomentschwankungsabsorptionsgerät (1) gemäß einem der Ansprüche 1 bis 3, wobei
das erste Sitzelement (41) und das zweite Sitzelement (43) Metall, Harz oder Gummi, oder eine Kombination daraus, sind.

5. Drehmomentschwankungsabsorptionsgerät (1) gemäß einem der Ansprüche 1 bis 4, wobei
das elastische Element (42, 44) eine Schraubenfeder ist; und
eine andere Schraubenfeder, die sich im Inneren der Schraubenfeder befindet und die sich zwischen dem ersten Sitzelement (41) und dem zweiten Sitzelement (43) befindet.

6. Drehmomentschwankungsabsorptionsgerät (1) gemäß einem der Ansprüche 1 bis 5, wobei
das elastische Element (42, 44) eine Schraubenfeder ist; und
ein Polstermaterial, das sich im Inneren der Schraubenfeder befindet, zwischen dem ersten Sitzelement (41) und dem zweiten Sitzelement (43) gehalten ist, bevor der erste Anschlag und der zweite Anschlag aneinander anliegen, wenn zwischen dem ersten Rotationselement (20) und dem zweiten Rotationselement (30) eine Verdrehung auftritt.

7. Drehmomentschwankungsabsorptionsgerät (1) gemäß einem der Ansprüche 1 bis 6, wobei
Oberflächen des ersten Anschlagabschnitts und des zweiten Anschlagabschnitts, die aneinander anliegen, entlang einer Linie in einer Radialrichtung ausgebildet sind, welche eine Rotationsachsenmitte des zweiten Rotationselements (30) passiert.

8. Drehmomentschwankungsabsorptionsgerät (1) gemäß einem der Ansprüche 1 bis 7, wobei
jede der Oberflächen des ersten Sitzelements und des zweiten Sitzelements, die von der Rotationsachse des ersten Rotationselements (20) am weitesten beabstandet ist, mit dem ersten Rotationselement (20) gleitfähig ist und (ein) ausgebildete(s) darin Nutteil(e) (41c, 41d) hat.

9. Drehmomentschwankungsabsorptionsgerät (1) gemäß Anspruch 8, wobei
das erste Rotationselement (20) ringförmig ist; und
eines oder mehrere Nutteile in einer Umfangsrichtung des ersten Rotationselements (20) ausgebildet ist/sind.

10. Drehmomentschwankungsabsorptionsgerät (1) gemäß Anspruch 8 oder Anspruch 9, wobei
das erste Rotationselement (20) ringförmig ist; und
eines oder mehrere Nutteile senkrecht zu der Umfangsrichtung des ersten Rotationselements (20) ausgebildet ist/sind.

11. Drehmomentschwankungsabsorptionsgerät (1) gemäß einem der Ansprüche 1 bis 10, wobei
die Kontaktabschnitte (32b, 32c) Oberflächen (32a) haben, die mit dem ersten Sitzelement (41) oder dem zweiten Sitzelement (43) in Kontakt kommen können, und
die Oberflächen (32h) Sektionen aufweisen, die entlang einer Linie in der Radialrichtung des zweiten Rotationselements (30) ausgebildet sind, die die Rotationsachsenmitte des zweiten Rotationselements (30) passiert.

12. Drehmomentschwankungsabsorptionsgerät (1) gemäß einem der Ansprüche 1 bis 11, wobei
die Kontaktabschnitte (32b, 32c) so ausgebildet sind, dass sie weiter radial einwärts des zweiten Rotationselements (30) als die Oberflächen ausgebildet sind, die mit dem ersten Rotationselement (20) oder dem zweiten Rotationselement (30) in Kontakt kommen können.

13. Drehmomentschwankungsabsorptionsgerät (1) gemäß einem der Ansprüche 11 bis 12, wobei
Eckabschnitte der Kontaktabschnitte (32b, 32c), die dem ersten Sitzelement (41) oder dem zweiten Sitzelement (43) zugewandt sind, gekrümmte Oberflächenteile aufweisen, die in eine glatte Bogenform abgerundet sind.

## Revendications

1. Appareil d'absorption de fluctuation de couple (1) comprenant :
un premier élément rotatif (20) qui est agencé pour pouvoir tourner ;
un second élément rotatif (30) qui est agencé pour pouvoir tourner par rapport au premier élément rotatif (20) ;
un élément élastique (42, 44) qui absorbe le couple fluctuant dû à la torsion entre le premier élément rotatif (20) et le second élément rotatif (30) ;
un premier élément de siège (41) qui, tout en supportant une extrémité de l'élément élastique (42), reçoit une force qui est transmise de l'un parmi le premier élément rotatif (20) et le second élément rotatif (30) lorsque la torsion a lieu entre le premier élément rotatif (20) et le second élément rotatif (30) ; et
un second élément de siège (43) qui, tout en supportant l'autre extrémité de l'élément élastique (44), reçoit une force qui est transmise de l'un parmi le premier élément rotatif (20) et le second élément rotatif (30) lorsque la torsion a lieu entre le premier élément rotatif (20) et le second élément rotatif (30) ; dans lequel
le premier élément de siège (41) a une première partie de butée qui s'étend vers le second élément de siège (43) et comprend une première partie d'extension (41a) qui supporte une partie de l'élément élastique (42) qui est séparée par une distance spécifiée d'un axe de rotation du premier élément rotatif (20), et une seconde partie d'extension (41b) qui supporte une partie de l'élément élastique (42) qui est séparée par une distance de l'axe de rotation du premier élément rotatif (20) qui est inférieure à la distance spécifiée ;
le second élément de siège (43) a une seconde partie de butée qui s'étend vers le premier élément de siège (41) qui comprend une première partie d'extension (43a) qui supporte une partie de l'élément élastique (42) qui est séparée par une distance spécifiée de l'axe de rotation du premier élément rotatif (20) et une seconde partie d'extension (43b) qui supporte une partie de l'élément élastique (42) qui est séparée par une distance de l'axe de rotation du premier élément rotatif (20) qui est inférieure à la distance spécifiée ; et
la torsion entre le premier élément rotatif (20) et le second élément rotatif (30) est limitée par la première partie de butée qui vient en contact avec la seconde partie de butée, dans lequel
le second élément rotatif (30) est formé selon une forme annulaire, et a plusieurs parties en saillie (32a) sur la surface d'extrémité périphérique externe qui font saillie dans une direction s'éloignant de l'axe de rotation du premier élément rotatif (20) ;
il y a au moins un élément élastique (42) ;
le premier élément de siège (41) ou le second élément de siège (43), étant positionné dans la direction circonférentielle entre la partie d'extrémité de l'élément élastique (42) et les parties en saillie (32a), peut venir en contact avec les parties en saillie (32a) ; **caractérisé en ce que**
les parties en saillie (32a) ont des parties de contact (32b, 32c) s'étendant dans une direction axiale du second élément rotatif (30) ; et
les parties de contact (32b, 32c) viennent en contact avec le premier élément de siège (41) ou le second élément de siège (43) ;
les parties de contact (32b, 32c) sont formées également pour continuer davantage vers l'extérieur dans la direction radiale du second élément rotatif (30) que les surfaces (32h) qui viennent en contact avec le premier élément rotatif (20) ou le second élément rotatif (30) ; et dans lequel
les parties de contact (32b, 32c) s'étendent vers les deux côtés dans la direction axiale.

2. Appareil d'absorption de fluctuation de couple (1) selon la revendication 1, dans lequel
les surfaces de la première partie de butée et de la seconde partie de butée qui font face à une surface entourant l'élément élastique (42, 44) sont des surfaces inclinées qui sont formées afin d'être inclinées à partir d'une partie d'extrémité de base de la première partie de butée et de la seconde partie de butée vers des extrémités de pointe dans une direction s'éloignant d'une surface circonférentielle externe de l'élément élastique (42, 44).

3. Appareil d'absorption de fluctuation de couple (1) selon la revendication 1 ou 2, dans lequel
la première partie de butée s'étend vers la seconde partie de butée afin de couvrir toute la circonférence de l'élément élastique (42, 44) ;
la seconde partie de butée s'étend vers la première partie de butée afin de couvrir toute la circonférence de l'élément élastique (42, 44) ; et
la torsion entre le premier élément rotatif (20) et le second élément rotatif (30) est limitée par la butée de la première partie de butée sur la circonférence interne de l'élément élastique (42, 44).

4. Appareil d'absorption de fluctuation de couple (1) selon l'une quelconque des revendications 1 à 3, dans lequel
le premier élément de siège (41) et le second élément de siège (43) sont en métal, en résine ou en caoutchouc ou leur combinaison.

5. Appareil d'absorption de fluctuation de couple (1) selon l'une quelconque des revendications 1 à 4, dans lequel
l'élément élastique (42, 44) est un ressort hélicoïdal ; et
un autre ressort hélicoïdal qui est situé à l'intérieur du ressort hélicoïdal et est situé entre le premier élément de siège (41) et le second élément de siège (43).

6. Appareil d'absorption de fluctuation de couple (1) selon l'une quelconque des revendications 1 à 5, dans lequel
l'élément élastique (42, 44) est un ressort hélicoïdal ; et
un matériau d'amortissement qui, étant positionné à l'intérieur du ressort hélicoïdal, est maintenu entre le premier élément de siège (41) et le second élément de siège (43) avant que la première partie de butée et la seconde partie de butée ne viennent en butée entre elles, lorsque la torsion a lieu entre le premier élément rotatif (20) et le second élément rotatif (30).

7. Appareil d'absorption de fluctuation de couple (1) selon l'une quelconque des revendications 1 à 6, dans lequel
les surfaces de la première partie de butée et de la seconde partie de butée qui viennent en butée entre elles, sont formées le long d'une ligne dans une direction radiale qui passe par un centre de l'axe de rotation du second élément de rotation (30).

8. Appareil d'absorption de fluctuation de couple (1) selon l'une quelconque des revendications 1 à 7, dans lequel
chacune des surfaces du premier élément de siège et du second élément de siège qui sont séparés le plus à distance de l'axe de rotation du premier élément rotatif (20), peut coulisser avec le premier élément rotatif (20) et a une (des) partie(s) de rainure (41c, 41d) formée(s) à l'intérieur de cette dernière.

9. Appareil d'absorption de fluctuation de couple (1) selon la revendication 8, dans lequel
le premier élément rotatif (20) est de forme annulaire ; et
une ou plusieurs parties de rainure sont formées dans une direction circonférentielle du premier élément rotatif (20).

10. Appareil d'absorption de fluctuation de couple (1) selon la revendication 8 ou la revendication 9, dans lequel
le premier élément rotatif (20) est de forme annulaire ; et
une ou plusieurs parties de rainure sont formées de manière orthogonale par rapport à la direction circonférentielle du premier élément rotatif (20).

11. Appareil d'absorption de fluctuation de couple (1) selon l'une quelconque des revendications 1 à 10, dans lequel
les parties de contact (32b, 32c) ont des surfaces (32h) qui peuvent venir en contact avec le premier élément de siège (41) ou le second élément de siège (43), et
lesdites surfaces (32h) comprennent des sections formées le long d'une ligne dans la direction radiale du second élément rotatif (30) qui passe par le centre de l'axe de rotation du second élément rotatif (30).

12. Appareil d'absorption de fluctuation de couple (1) selon l'une quelconque des revendications 1 à 11, dans lequel
les parties de contact (32b, 32c) sont formées également pour continuer davantage radialement vers l'intérieur du second élément rotatif (30) que les surfaces qui peuvent venir en contact avec le premier élément rotatif (20) ou le second élément rotatif (30).

13. Appareil d'absorption de fluctuation de couple (1) selon l'une quelconque des revendications 11 à 12, dans lequel
des sections de coin des parties de contact (32b, 32c) qui font face au premier élément de siège (41) ou au second élément de siège (43) ont des parties de surface incurvées qui sont arrondies selon une forme d'arc douce.
